# EUROPEAN PATENT APPLICATION

(11) **EP 0 786 385 A1**
(43) Date of publication of application: **30.07.1997**
(21) Application number: 96117618.7
(22) Date of filing: 04.11.1996
(51) Int. Cl.: B60S 1/08

(54) **A method and unit for regulating the wiping frequency of a windscreen wiper**

(30) Priority: 23.01.1996 IT TO960035
(71) Applicant: FIAT AUTO S.p.A., 10135 Torino (IT)
(72) Inventor: Troisi, Roberto, IT-10139 Torino (IT)
(74) Representative: Plebani, Rinaldo

(57) **Abstract**

The method of regulating includes the steps of generating at least one selection signal (S₁) for selecting a first mode of operation of a windscreen wiper (2); generating a control signal (C) for the motor (6) which drives the windscreen wiper (2) in dependence on the selection signal (S₁); supplying the control signal (C) to the motor (6) to cause the windscreen wiper (2) to operate in the first mode of operation; generating a speed signal (V) correlated with the speed of the vehicle on which the windscreen wiper (2) is mounted; comparing the speed signal (V) with a predetermined reference value (Vₜₕ₁); modifying the control signal (C) whenever the speed signal (V) is less than the predetermined reference value (Vₜₕ₁); and supplying the modified control signal (C) to the motor (6) to cause the windscreen wiper (2) to change from the first operational mode to a second operational mode.

## Description

The present invention relates to a method and unit for regulating the wiping frequency of a windscreen wiper.

As is known, the wiping frequency of front windscreen wipers of vehicles can be regulated by a means of regulatory devices controlled by a manually operable control lever which can take up a plurality of positions, each of which corresponds to a predetermined mode of operation of the windscreen wipers.

Generally windscreen wipers are provided with an intermittent operational mode, a continuous operational mode and a stationary mode.

In the continuous and intermittent modes, it is generally also possible to choose different wiping frequencies.

These choices are not, however, always sufficient to achieve an optimum compromise between the speed of wiping of the windscreen and the strength of the rain since the degree of wetting of the windscreen depends mainly on the strength of the rain and the speed of the vehicle.

The wiping frequency selected for a particular speed of the vehicle may be excessive when the vehicle stops, for example at traffic lights, since, in this event, the windscreen may be dried too much with the result that the wiper finds difficulty in sliding over the windscreen.

The object of the present invention is to provide a method and unit for regulating the wiping frequency of a windscreen wiper which overcomes the problems of the prior art.

According to the present invention, there is provided a method of regulating the wiping frequency of a windscreen wiper, the windscreen wiper being adapted to be mounted on a vehicle and to be driven by a motor carried by the vehicle, the method including the steps of:
- generating at least one selection signal for selecting a first mode of operation of the windscreen wiper;
- generating a control signal for the motor in dependence on the selection signal; and
- supplying the control signal to the motor to cause the windscreen wiper to operate in the first operational mode,
   characterised in that it includes the further steps of:
- generating a speed signal correlated with the speed of the vehicle;
- comparing the speed signal with a predetermined reference value;
- modifying the control signal whenever the speed signal has a first predetermined relationship with the predetermined reference value; and
- supplying the modified control signal to the motor to cause the windscreen wiper to change from the first operational mode to a second operational mode.

The present invention also provides a unit for regulating the wiping frequency of a windscreen wiper, the windscreen wiper being adapted to be mounted on a vehicle and to be driven by a motor carried by the vehicle, the regulatory unit including:
- selector means for generating at least one selection signal for selecting a first mode of operation of the windscreen wiper;
- control means connected to the selector means for generating a control signal for the motor in dependence on the selection signal and for supplying the control signal to the motor to cause the windscreen wiper to operate in the first operational mode,
   characterised in that it further includes:
- sensor means for generating a speed signal correlated with the speed of the vehicle;
- first regulatory means adapted to modify the control signal to cause the windscreen wiper to change from the first operational mode to a second operational mode; and
- first comparator means for comparing the speed signal with a predetermined reference value for selecting the first regulatory means when the speed signal has a predetermined relationship with the predetermined reference value.

For a better understanding of the present invention, a preferred embodiment is now described, purely by way of non-limitative example, with reference to the appended drawings, in which:
Figure 1 illustrates schematically a windscreen wiping system to which the regulatory unit according to the present invention is applied; and
Figure 2 is a flow diagram illustrating the method of the invention.

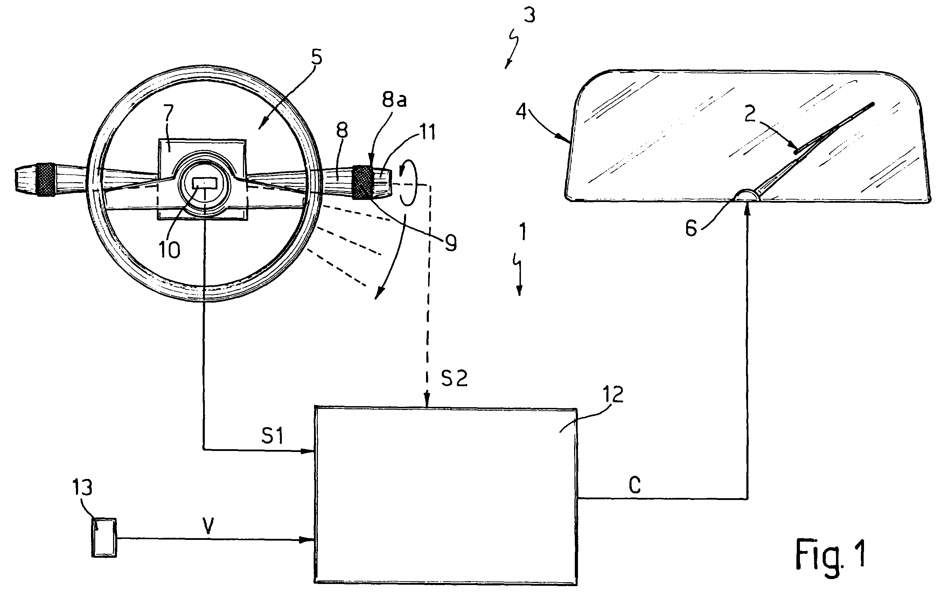

In Figure 1, a unit for regulating the wiping frequency of a windscreen wiper 2 (illustrated schematically) is generally indicated 1.

The regulatory unit 1 is part of a system 3 for wiping a front windscreen 4 to which the windscreen wiper 2 is fitted.

The wiping system 3 includes the regulatory unit 1, a selector unit 5 connected to the regulatory unit 1 and adapted to select the mode of operation and wiping frequency of the windscreen wiper 2 and a motor 6 controlled by the regulatory unit 1 and connected to drive the windscreen wiper 2.

The selector unit 5 is conveniently arranged on a steering column 7 of a vehicle (not illustrated) and is arranged to generate first and second selection signals, S₁, S ₂, correlated with the operational mode and the wiping frequency of the windscreen wiper, respectively.

In particular, the selector unit 5 (of known type) includes a control lever 8 arranged to take up a first plurality of fixed positions (illustrated in broken outline), each of which corresponds to a respective operational mode of the windscreen wiper 2 (for example, intermittent, continuous or disengaged).

The selector unit 5 further includes a control ring 9 carried by the control lever 8 and adapted to take up a second plurality of fixed angular positions, each of which corresponds to a respective wiping frequency of the windscreen wiper 2.

The control lever 8 is of substantially cylindrical, elongate shape and projects from the steering column 7 so as to present a free end portion 8a on which the control ring 9 is located.

The regulatory unit 1 includes a first sensor 10 coupled to the control lever 8 and adapted to generate the first selection signal S₁ on the basis of the position assumed by the control lever 8 relative to the steering column 7; a second sensor 11 coupled to the control ring 9 and adapted to generate the second selection signal S₂ on the basis of the angular position of the control ring 9 relative to the control lever 8; and an electronic control unit 12 to which the selection signals S₁, S₂ are input.

The electronic control unit 12 also receives a speed signal V correlated with the speed of the vehicle (not illustrated) and generated by a speed sensor 13 (of known type), for example coupled with the hub (not illustrated) of a vehicle wheel (not illustrated).

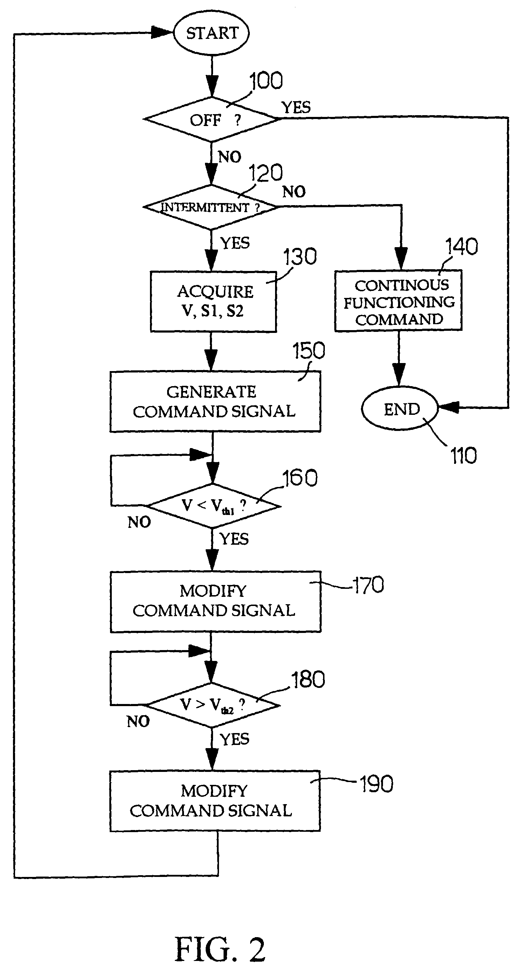

The electronic control unit 12 outputs a control signal C to the motor 6 which drives the windscreen wiper 2 to regulate the wiping frequency of the windscreen wiper 2 itself, implementing operations explained in detail below with reference to Figure 2.

As illustrated in figure 2, the electronic unit 12 initially verifies which mode of operation of the windscreen wiper 2 has been selected (block 100).

If the stationary mode of the windscreen wiper 2 has been selected, then no control signal C for the motor 6 is generated and the regulatory operations (block 110) are terminated whereas, if the intermittent mode or continuous mode of the windscreen wiper 2 has been selected, then one moves from the block 100 to a block 120.

The block 120 verifies the operational mode selected; in particular, when the intermittent mode is selected, the block 120 is followed by a block 130 whereas, in the alternative, (continuous mode selected), the block 120 is followed by a block 140.

The block 140, in known manner, controls the motor 6 for the windscreen wiper 2 during continuous operation.

The block 130 acquires the speed signal V and the selection signals S₁, S₂ and is followed by a block 150 which generates a control signal C for the motor 6 on the basis solely of the selection signals S₁ and S₂ to make the windscreen wiper 2 operate in the mode and at the frequency set by the control lever a and the control ring 9.

The block 150 is followed by a block 160 which compares the speed signal V with a predetermined minimum reference value Vₜₕ₁; in particular, if the speed signal V is less than the predetermined minimum reference value Vₜₕ₁, the block 160 is followed by a block 170 which modifies the control signal C so as to modify the wiping frequency previously set (whatever this is) so as to make the windscreen wiper 2 operate at a predetermined minimum frequency.

If the speed signal V is greater than the predetermined minimum reference value Vₜₕ₁, the block 160 is disposed in a waiting cycle, maintaining the frequency previously set.

Obviously if the frequency of the windscreen wiper 2 is already at the minimum frequency, then the control unit 12 does not modify the control signal C.

The block 170 is followed by a block 180 which compares the speed signal V with a predetermined maximum reference value Vₜₕ₂; more particularly, if the speed signal V is greater than the predetermined maximum reference value Vₜₕ₂, the block 180 is followed by a block 190 which modifies the control signal C so as to modify the wiping frequency previously modified so as to make the windscreen wiper 2 operate at the frequency set manually and defined by the signals S₁, S₂ acquired by the block 130.

If the speed signal V is less than the predetermined maximum value Vₜₕ₂, the block 180 is disposed in a waiting cycle, maintaining the wiping frequency currently in use.

The change from the minimum wiping frequency to that set by the control lever 8 and the control ring 9 may occur continuously or, alternatively, in discrete increments.

The operations explained above are then repeated until the stoppage of the windscreen wiper 2 is selected in the block 100.

The advantages of the present method are as follows. First of all it allows the wiping frequency of the windscreen wiper 2 to be adapted automatically to the speed of the vehicle so as to reduce the wiping frequency when the vehicle slows or stops. This prevents excessive drying of the windscreen 3 in these conditions and reduces wear on the windscreen wiper 2 and the motor 6.

Moreover the method is simple and easy to achieve and requires little modification to the windscreen wiper system, with no need to provide dedicated equipment.

Finally it is clear that modifications and variations may be made to the unit described and illustrated herein without thereby departing from the scope of the present invention.

For example, the electronic control unit 12 could cause the wiping frequency of the windscreen wiper 2 to be increased when the speed of the vehicle increases in a manner similar to that described with reference to Figure 2.

## Claims

1. A method of regulating the wiping frequency of a windscreen wiper (2), the windscreen wiper (2) being adapted to be mounted on a vehicle and being driven by a motor (6) carried by the vehicle, the method including the steps of:
- generating (5) at least one selection signal (S₁) for selecting a first operational mode of the windscreen wiper (2);
- generating (150) a control signal (C) for the motor (6) in dependence on the selection signal (S₁); and
- supplying the control signal (C) to the motor (6) to cause the windscreen wiper (2) to operate in the first operational mode,
characterised in that it further includes the steps of:
- generating (13) a speed signal (V) correlated with the speed of the vehicle;
- comparing (160) the speed signal (V) with a predetermined reference value (Vₜₕ₁);
- modifying (170) the control signal (C) whenever the speed signal (V) has a first predetermined relationship with the predetermined reference value (Vₜₕ₁); and
- supplying the modified control signal (C) to the motor (6) to cause the windscreen wiper (2) to change from the first operational mode to a second operational mode.

2. A method according to Claim 1, characterised in that it includes the further steps of:
- comparing (180) the speed signal (V) with a further predetermined reference value (Vₜₕ₂);
- modifying (190) the control signal (C) further whenever the speed signal (V) has a second predetermined relationship with the further predetermined reference value (Vₜₕ₂); and
- supplying the further modified control signal (C) to the motor (6) to cause the windscreen wiper (2) to change from the second operational mode to the first operational mode.

3. A method according to Claim 1 or Claim 2, characterised in that the first and second operational modes of the windscreen wiper (2) correspond to first and second wiping frequencies respectively of the windscreen wiper (2), and in that the first wiping frequency is greater than the second wiping frequency.

4. A method according to any one of the preceding claims, characterised in that the step (170) of modifying the control signal (C) is carried out whenever the speed signal (V) is less than the predetermined reference value (Vₜₕ₁).

5. A method according to Claim 2, characterised in that the step (190) of further modifying the control signal (C) is carried out whenever the speed signal (V) is greater than the further predetermined reference value (Vₜₕ₂).

6. A unit (1) for regulating the wiping frequency of a windscreen wiper (2), the windscreen wiper (2) being adapted to be mounted on a vehicle and to be driven by a motor (6) carried by the vehicle, the regulatory unit (1) including:
- selector means (5) for generating at least one selection signal (S₁) for selecting a first operational mode of the windscreen wiper (2);
- control means (12) connected to the selector means (5) for generating a control signal (C) for the motor (6) in dependence on the selection signal (S₁) and for supplying the control signal (C) to the motor (6) to cause the windscreen wiper (2) to operate in the first operational mode,
characterised in that it further includes:
- sensor means (13) for generating a speed sensor (V) correlated with the speed of the vehicle;
- first regulatory means (170) adapted to modify the control signal (C) to cause the windscreen wiper (2) to change from the first operational mode to a second operational mode;
- first comparator means (160) for comparing the speed signal (V) with a predetermined reference value (Vₜₕ₁) for selecting the first regulatory means (170) when the speed signal (V) has a first predetermined relationship with the predetermined reference value (Vₜₕ₁).

7. A unit according to Claim 6, characterised in that it further includes:
- second regulatory means (190) for modifying the control signal (C) further to cause the windscreen wiper (2) to change from the second operational mode to the first operational mode;
- second comparator means (180) for comparing the speed signal (V) with a further predetermined reference value (Vₜₕ₂) for selecting the second regulatory means (190) when the speed signal (V) has a second predetermined relationship with the further reference value (Vₜₕ₂).

8. A unit according to Claim 6 or Claim 7, characterised in that the first and second operational modes of the windscreen wiper (2) correspond to first and second wiping frequencies of the windscreen wiper (2) respectively; the first wiping frequency being greater than the second wiping frequency.

9. A unit according to any one of Claims 6 to 8, characterised in that the first comparator means (160) select the first regulatory means (170) when the speed signal (V) is less than the predetermined reference value (Vₜₕ₁).

10. A unit according to Claim 7, characterised in that the second comparator means (180) select the second regulatory means (190) when the speed signal (V) is greater than the further predetermined reference value (Vₜₕ₂).
